# EUROPEAN PATENT APPLICATION

(11) **EP 1 263 076 A2**
(43) Date of publication of application: **04.12.2002**
(21) Application number: 01122042.3
(22) Date of filing: 13.09.2001
(51) Int. Cl.: H01M 10/40

(54) **Electrolyte and lithium ion secondary battery**

(30) Priority: 30.05.2001 JP 2001161587
(71) Applicant: Hitachi, Ltd., Chiyoda-ku, Tokyo 101-8010 (JP)
(72) Inventor: Okumura, Takefumi, Intl.Prop.Grp., Chiyoda-ku, Tokyo 100-8220 (JP); Nishimura, Shin, Intl.Prop.Grp., Chiyoda-ku, Tokyo 100-8220 (JP); Akatsuka, Masaki, Intl.Prop.Grp., Chiyoda-ku, Tokyo 100-8220 (JP)
(74) Representative: Strehl Schübel-Hopf & Partner

(57) **Abstract**

An electrolyte, which comprises (a) a compound having at least one methylene group adjacent to an oxygen atom in the molecule, (b) a compound represented by the following formula (1), 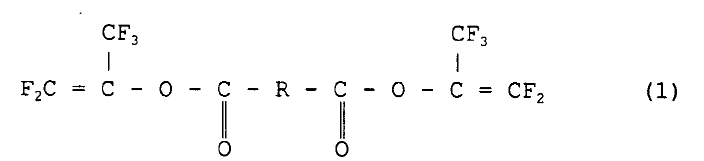 wherein R is 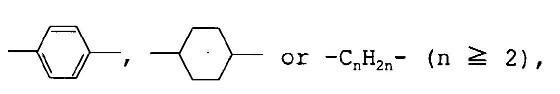 and (c) an electrolytic salt, compounds (a) and (b) having been polymerized with each other, exhibits a high ionic conductivity, and a lithium ion secondary battery incorporating said electrolyte exhibits superior charge and discharge characteristics.

## Description

### BACKGROUND OF THE INVENTION

### FIELD OF THE INVENTION

The present invention relates to an electrolyte having a high ionic conductivity and a lithium ion secondary battery having superior charge and discharge characteristics.

### DESCRIPTION OF THE RELATED ART

A liquid electrolyte has been used as an electrolyte constituting electrochemical devices such as a battery, a capacitor and a sensor, from a viewpoint of its ionic conductivity. However, there has been left a problem such that the devices are liable to suffer damage from leakage of the liquid.

While, a secondary battery incorporating a solid electrolyte such as inorganic crystalline substances, inorganic glass and organic polymers has recently been proposed.

In contrast to the use of a conventional liquid electrolyte, use of such a solid electrolyte permits improvement in reliability and safety of the devices due to no liquid leakage and decrease in possibility of firing to the electrolyte.

In addition, the development of organic polymers is awaited from a viewpoint that organic polymers are generally superior in their processability and moldability, and capable of providing an electrolyte having flexibility as well as bending processability, whereby the devices to which the electrolyte is applied enjoy increased design freedom.

However, it is true that the organic polymers as mentioned above are inferior in their ionic conductivity to other materials. For example, as well known, it has been attempted to incorporate a specific alkali metal salt into polyethylene oxide to obtain a polymer electrolyte, but the conductivity thereof has not come to meet a practically sufficient degree.

A copolymer of a fluorine compound having a double bond in the molecule and 1,4-dioxane was reported in Macromol. Rapid Commun. 19(1998)485, Macromol. Chem. Phys. 201(2000)201). But, it is no more than a disclosure of such a copolymer, and there is entirely no suggestion to apply the copolymer to a polymer electrolyte.

The present invention has been attained under these circumstances, and an object thereof is to provide an electrolyte having a high ionic conductivity, and further provide a lithium ion secondary battery having superior charge and discharge characteristics by using such an electrolyte.

### SUMMARY OF THE INVENTION

The present invention for accomplishing the above-mentioned objects is characterized by providing an electrolyte, which comprises a first compound having at least one methylene group adjacent to an oxygen atom in the molecule, a perfluoroisopropenyl ester-carrying second compound represented by the following formula (1), 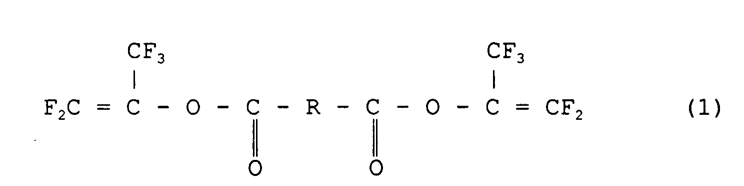 wherein R is 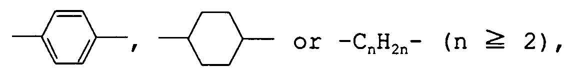 and an electrolytic salt, the first compound and the second compound having been polymerized with each other.

Further, the present invention is characterized in that the first compound comprises at least one compound selected from the group consisting of diethyl carbonate, 1,4-dioxane, polyethylene glycol, ethylene carbonate and dimethyl carbonate. Still further, the present invention is characterized by providing a lithium ion secondary battery comprising a positive electrode capable of occluding and discharging lithium ion, a negative electrode capable of occluding and discharging lithium ion and an electrolyte containing lithium ion, which electrolyte comprises a first compound having at least one methylene group adjacent to an oxygen atom in the molecule, a perfluoroisopropenyl ester-carrying second compound represented by the above formula (1), and an electrolytic salt, the first compound and the second compound having been polymerized with each other.

### BRIEF DESCRIPTION OF THE DRAWING

Fig. 1 shows a structural view of a positive electrode, a negative electrode and an electrolyte film.
Fig. 2 shows a structural view of a positive electrode, a negative electrode and an electrolyte film.

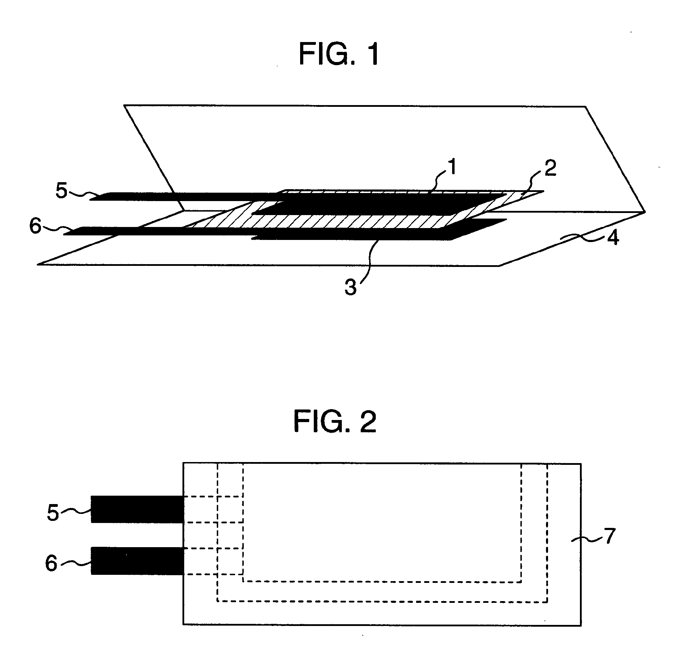

Fig. 1 and Fig. 2 comprise a positive electrode plate 1, an electrolyte film 2, a negative electrode plate 3, aluminum-laminated films 4 and 7, a stainless steel terminal 5 of the positive electrode, and a stainless steel terminal 6 of the negative electrode.

### DESCRIPTION OF THE PREFERRED EMBODIMENT

The present invention is explained in detail as follows.

The methylene group in the present invention means the structure of -CH₂-. The first compound (a) having at least one methylene group adjacent to an oxygen atom in the molecule refers to a compound with at least one methylene group in the molecule in which at least one of the two atoms bonded to one or more of the at least one methylene group is an oxygen atom. The compound having at least one methylene group adjacent to an oxygen atom in the molecule is not particularly limited. Preferred examples thereof are diethyl carbonate, 1,4-dioxane, polyethylene glycol, ethylene carbonate and dimethyl carbonate.

The perfluoroisopropenyl ester-carrying second compound (b) means a dipentafluoroisopropenyl compound represented by the foregoing formula (1).

In the present invention, a radical polymerization initiator can be used for the polymerization reaction between compounds (a) and (b). Typical initiators include, but are not limited to, organic peroxides and azo compounds. For example, the organic peroxides include benzoyl peroxide and the azo compounds include 2,2'-azobisisobutylonitrile, respectively. The initiator in the present invention can be used in an amount of from 0.1 mol% inclusive to 50 mol% inclusive, preferably from 10 mol% inclusive to 40 mol% inclusive, relative to the perfluoroisopropenyl group in compound (b).

The form of the electrolyte in the present invention is not particularly limited, and may be gel and solid.

The electrolytic salt (c) in the present invention refers to any salt provided that it is usable as an electrolytic salt for a lithium ion secondary battery. Specific examples thereof are LiPF₆, LiN(CF₃SO₃)₂, LiCF₃SO₃, LiClO₄, LiBF₄, LiASF₆, LiI, LiBr, LiSCN, Li₂B₁₀Cl₁₀, LiCF₃CO₂, compounds represented by a lithium salt of a lower aliphatic carboxylic acid and a mixture thereof.

The positive electrode capable of reversibly occluding and discharging lithium ion, which can be used in the present invention, includes mixtures of layer compounds such as lithium cobaltate (LiCoO₂) and lithium nickelate (LiNiO₂); those substituted with at least one transition metal; lithium manganates (Li₁₊ₓMn₂₋ ₓO₄ (x = 0 to 0.33), Li₁₊ₓMn_{2-x-y}M_{y}O₄ (M is at least one metal selected from the group consisting of Ni, Co, Cr, Cu, Fe, Al and Mg, x = 0 to 0.33, y = 0 to 1.0, and 2-x-y > 0), LiMnO₃, LiMn₂O₃, LiMnO₂, LiMn₂₋ₓMₓO₂ (wherein M is at least one metal selected from the group consisting of Co, Ni, Fe, Cr, Zn and Ta, and x= 0.01 to 0.1), and Li₂Mn₃MO₈ (wherein M is at least one metal selected from the group consisting of Fe, Co, Ni, Cu and Zn); copper-lithium oxide (Li₂CuO₂); LiFe₃O₄; vanadium oxides such as LiV₃O₈, V₂O₅ and Cu₂V₂O₇; disulfide compounds; and Fe₂(MoO₄)₃.

The negative electrode capable of reversibly occluding and discharging a lithium ion, which can be used in the present invention, includes products produced by subjecting easily graphitizable materials obtained from natural graphite, petroleum coke, coal pitch coke or the like, to heat treatment at a high temperature such as 2500°C or higher; meso phase carbon; amorphous carbon; carbon fiber; metals capable of forming alloys with lithium; and materials which is a metal supported on the surface of carbon particles. Specific examples are metals selected from lithium, aluminum, tin, indium, gallium and magnesium, silicon and their alloys.

In addition, said metals, silicon and their oxides can be used as the negative electrode.

The lithium ion secondary battery in accordance with the present invention is not particularly limited in its applications. For example, it can be used, for example, as a power supply for IC cards, personal computers, large-sized computers, notebook type personal computers, pen-inputting personal computers, notebook type word processors, portable telephones, pocket cards, wrist watches, cameras, electric shavers, cordless telephones, facsimiles, videos, video cameras, electronic pocketbooks, desk-top computers, electronic pocketbooks provided with a means of communication, portable copying machines, televisions provided with a liquid crystal display, electromotive tools, cleaners, game-playing machines provided with a function of virtual reality, toys, electromotive bicycles, walking aids for medical care use, wheelchairs for medical care use, mobile beds for medical care use, escalators, elevators, forklifts, golf carts, power supplies provided against emergencies, road conditioners and electric-power storing systems. Besides for such civil use, it can be applied for munition use and for space use.

### Example

The present invention is explained in more detail with reference to the following Examples, which are not intended to limit the scope of the present invention.

### EMBODIMENT FOR FABRICATION OF ELECTRODES

### <Positive electrode>

A mixture of Cell Seed, lithium cobaltate manufactured by Nippon Chemical Industrial Co., Ltd.; SP 270, graphite manufactured by Nippon Graphite Industrial, Ltd. and KF 1120, polyvinylidene fluoride manufactured by Kureha Chemical Industry Co., Ltd., in a weight ratio of 80 : 10 : 10 was added to N-methyl-2-pyrrolidone to mix with one another, thereby obtaining a slurry. The slurry was coated on an aluminum foil having a thickness of 20 µm using a doctor blade and then dried. The slurry was coated in an amount of 150 g/m². The dried foil was pressed so that the bulk density of the coating be 3.0 g/cm³ and cut into a 1 cm × 1 cm size to obtain a positive electrode.

### <Negative electrode>

A mixture of Carbotron PE, amorphous carbon manufactured by Kureha Chemical Industry Co., Ltd.; and KF 1120, polyvinylidene fluoride manufactured by Kureha Chemical Industry Co., Ltd. in a weight ratio of 90 : 10 was added to N-methyl-2-pyrrolidone to mix with one another, thereby obtaining a slurry. The slurry was coated on a copper foil having a thickness of 20 µm using a doctor blade and then dried. The slurry was coated in an amount of 70 g/m². The dried foil was pressed so that the bulk density of the coating be 1.0 g/cm³ and cut into a 1.2 cm × 1.2 cm size to obtain a negative electrode.

### 2. Evaluation method

### <Ionic conductivity>

The measurement of the ionic conductivity was conducted according to an alternating impedance method wherein a polymer electrolyte was sandwiched between stainless steel electrodes at 25°C to form an electrochemical cell, and an alternating current was applied between the electrodes to measure an electric resistance, followed by calculation using a real impedance section of Cole-Cole plot.

### <Charging and discharging conditions of battery>

Charging and discharging were conducted at a temperature of 25°C and a current density of 0.5 mA/cm² using TOSCAT 3000, a charger-discharger manufactured by TOYO SYSTEM Co., Ltd. A fixed current charging was carried out until the voltage reached 4.2 V, and thereafter a fixed voltage charging was carried out for additional 12 hours. Further, a fixed current discharging was carried out to the discharge terminating voltage of 3.5 V. The capacity determined by the first discharging was defined as an initial discharging capacity. The cycle of one charging and one discharging under the conditions mentioned above was repeated until the capacity is reduced to not more than 70% of the initial discharging capacity, and the number of repetition therefor was defined as cycle characteristic. On the other hand, a fixed current charging was carried out at a current density of 1 mA/cm² until the voltage reached 4.2 V, and thereafter a fixed voltage charging was carried out for additional 12 hours. Further, a fixed current discharging was carried out to the discharge terminating voltage of 3.5 V. The capacity determined in this way was compared with the initial cycle capacity determined in the above-mentioned charging-discharging cycle, and the ratio thereof was defined as a high-speed charge-discharge characteristic.

Examples are given as follows.

### Example 1

2.14 Grams (5 mmol) of bis(pentafluoroisopropenyl) terephthalate (FDFT), 12 g (40 mmol) of polyethylene glycol (number average molecular weight: 300), 0.242 g (1 mmol) of benzoyl peroxide and LiPF₆ as an electrolytic salt were mixed to obtain a solution A having an electrolytic salt concentration of 1 mol/dm³. Successively, the solution A was coated on a glass using a bar coater, and kept at 80°C for 3 days to obtain a solid electrolyte A having a thickness of 100 µm. The thus obtained electrolyte film was cut to obtain a disk having a diameter of 1 cm. The disk was sandwiched between a pair of stainless steel electrodes, followed by measurement of the ionic conductivity at 25°C according to the above-mentioned ionic conductivity measurement method. The ionic conductivity was found to be 0.08 mS/cm. Thus the ionic conductivity higher than that in Comparative Example 1 as described below could be achieved.

### Example 2

2.03 Grams (5 mmol) of bis(pentafluoroisopropenyl) adipate (FDFA), 12 g (40 mmol) of polyethylene glycol (number average molecular weight: 300), 0.242 g (1 mmol) of benzoyl peroxide and LiPF₆ as an electrolytic salt were mixed to obtain a solution B having an electrolytic salt concentration of 1 mol/dm³. Successively, the solution B was coated on a glass using a bar coater, and kept at 80°C for 3 days to obtain a solid electrolyte B having a thickness of 100 µm. The thus obtained electrolyte film was cut to obtain a disk having a diameter of 1 cm. The disk was sandwiched between a pair of stainless steel electrodes, followed by measurement of the ionic conductivity at 25°C according to the above-mentioned ionic conductivity measurement method. The ionic conductivity was found to be 0.08 mS/cm. Thus the ionic conductivity higher than that in Comparative Example 1 as described below could be achieved.

### Example 3

2.16 Grams (5 mmol) of bis(pentafluoroisopropenyl) cyclohexane-1,4-dicarboxylate (FDFC), 12 g (40 mmol) of polyethylene glycol (number average molecular weight: 300), 0.242 g (1 mmol) of benzoyl peroxide and LiPF₆ as an electrolytic salt were mixed to obtain a solution C having an electrolytic salt concentration of 1 mol/dm³. Successively, the solution C was coated on a glass using a bar coater, and kept at 80°C for 3 days to obtain a solid electrolyte C having a thickness of 100 µm. The thus obtained electrolyte film was cut to obtain a disk having a diameter of 1 cm. The disk was sandwiched between a pair of stainless steel electrodes, followed by measurement of the ionic conductivity at 25°C according to the above-mentioned ionic conductivity measurement method. The ionic conductivity was found to be 0.09 mS/cm. Thus the ionic conductivity higher than that in Comparative Example 1 as described below could be achieved.

### Example 4

2.14 Grams (5 mmol) of bis(pentafluoroisopropenyl) terephthalate (FDFT), 3.68 g (40 mmol) of 1,4-dioxane, 0.242 g (1 mmol) of benzoyl peroxide and LiPF₆ as an electrolytic salt were mixed to obtain a solution D having an electrolytic salt concentration of 1 mol/dm³. Successively, the solution D was coated on a glass using a bar coater, and kept at 80°C for 3 days to obtain a solid electrolyte D having a thickness of 100 µm. The thus obtained electrolyte film was cut to obtain a disk having a diameter of 1 cm. The disk was sandwiched between a pair of stainless steel electrodes, followed by measurement of the ionic conductivity at 25°C according to the above-mentioned ionic conductivity measurement method. The ionic conductivity was found to be 0.09 mS/cm. Thus the ionic conductivity higher than that in Comparative Example 1 as described below could be achieved.

### Example 5

2.03 Grams (5 mmol) of bis(pentafluoroisopropenyl) adipate (FDFA), 3.68 g (40 mmol) of 1,4-dioxane, 0.242 g (1 mmol) of benzoyl peroxide and LiPF₆ as an electrolytic salt were mixed to obtain a solution E having an electrolytic salt concentration of 1 mol/dm³. Successively, the solution E was coated on a glass using a bar coater, and kept at 80°C for 3 days to obtain a solid electrolyte E having a thickness of 100 µm. The thus obtained electrolyte film was cut to obtain a disk having a diameter of 1 cm. The disk was sandwiched between a pair of stainless steel electrodes, followed by measurement of the ionic conductivity at 25°C according to the above-mentioned ionic conductivity measurement method. The ionic conductivity was found to be 0.1 mS/cm. Thus the ionic conductivity higher than that in Comparative Example 1 as described below could be achieved.

### Example 6

2.16 Grams (5 mmol) of bis(pentafluoroisopropenyl) cyclohexane-1,4-dicarboxylate (FDFC), 3.68 g (40 mmol) of 1,4-dioxane, 0.242 g (1 mmol) of benzoyl peroxide and LiPF₆ as an electrolytic salt were mixed to obtain a solution F having an electrolytic salt concentration of 1 mol/dm³. Successively, the solution F was coated on a glass using a bar coater, and kept at 80°C for 3 days to obtain a solid electrolyte F having a thickness of 100 µm. The thus obtained electrolyte film was cut to obtain a disk having a diameter of 1 cm. The disk was sandwiched between a pair of stainless steel electrodes, followed by measurement of the ionic conductivity at 25°C according to the above-mentioned ionic conductivity measurement method. The ionic conductivity was found to be 0.3 mS/cm. Thus the ionic conductivity higher than that in Comparative Example 1 as described below could be achieved.

### Example 7

2.14 Grams (5 mmol) of bis(pentafluoroisopropenyl) terephthalate (FDFT), 3.6 g (40 mmol) of dimethyl carbonate, 0.242 g (1 mmol) of benzoyl peroxide and LiPF₆ as an electrolytic salt were mixed to obtain a solution G having an electrolytic saltconcentration of 1 mol/dm³. Successively, the solution G was coated on a glass using a bar coater, and kept at 80°C for 3 days to obtain a solid electrolyte G having a thickness of 100 µm. The thus obtained electrolyte film was cut to obtain a disk having a diameter of 1 cm. The disk was sandwiched between a pair of stainless steel electrodes, followed by measurement of the ionic conductivity at 25°C according to the above-mentioned ionic conductivity measurement method. The ionic conductivity was found to be 0.3 mS/cm. Thus the ionic conductivity higher than that in Comparative Example 1 as described below could be achieved.

### Example 8

2.03 Grams (5 mmol) of bis(pentafluoroisopropenyl) adipate (FDFA), 3.6 g (40 mmol) of dimethyl carbonate, 0.242 g (1 mmol) of benzoyl peroxide and LiPF₆ as an electrolytic salt were mixed to obtain a solution H having an electrolytic salt concentration of 1 mol/dm³. Successively, the solution H was coated on a glass using a bar coater, and kept at 80°C for 3 days to obtain a solid electrolyte H having a thickness of 100 µm. The thus obtained electrolyte film was cut to obtain a disk having a diameter of 1 cm. The disk was sandwiched between a pair of stainless steel electrodes, followed by measurement of the ionic conductivity at 25°C according to the above-mentioned ionic conductivity measurement method. The ionic conductivity was found to be 0.4 mS/cm. Thus the ionic conductivity higher than that in Comparative Example 1 as described below could be achieved.

### Example 9

2.16 Grams (5 mmol) of bis(pentafluoroisopropenyl) cyclohexane-1,4-dicarboxylate (FDFC), 3.6 g (40 mmol) of dimethyl carbonate, 0.242 g (1 mmol) of benzoyl peroxide and LiPF₆ as an electrolytic salt were mixed to obtain a solution I having an electrolytic salt concentration of 1 mol/dm³. Successively, the solution I was coated on a glass using a bar coater, and kept at 80°C for 3 days to obtain a solid electrolyte I having a thickness of 100 µm. The thus obtained electrolyte film was cut to obtain a disk having a diameter of 1 cm. The disk was sandwiched between a pair of stainless steel electrodes, followed by measurement of ion conductivity at 25°C according to the above-mentioned ionic conductivity measurement method. The ionic conductivity was found to be 0.5 mS/cm. Thus the ionic conductivity higher than that in Comparative Example 1 as described below could be achieved.

### Example 10

2.14 Grams (5 mmol) of bis(pentafluoroisopropenyl) terephthalate (FDFT), 4.72 g (40 mmol) of diethyl carbonate, 0.242 g (1 mmol) of benzoyl peroxide and LiPF₆ as an electrolytic salt were mixed to obtain a solution J having an electrolytic salt concentration of 1 mol/dm³. Successively, the solution J was coated on a glass using a bar coater, and kept at 80°C for 3 days to obtain a solid electrolyte J having a thickness of 100 µm. The thus obtained electrolyte film was cut to obtain a disk having a diameter of 1 cm. The disk was sandwiched between a pair of stainless steel electrodes, followed by measurement of the ionic conductivity at 25°C according to the above-mentioned ionic conductivity measurement method. The ionic conductivity was found to be 0.5 mS/cm. Thus the ionic conductivity higher than that in Comparative Example 1 as described below could be achieved.

### Example 11

2.14 Grams (5 mmol) of bis(pentafluoroisopropenyl) terephthalate (FDFT), 3.52 g (40 mmol) of ethylene carbonate, 0.242 g (1 mmol) of benzoyl peroxide and LiPF₆ as an electrolytic salt were mixed to obtain a solution K having an electrolytic salt concentration of 1 mol/dm³. Successively, the solution K was coated on a glass using a bar coater, and kept at 80°C for 3 days to obtain a solid electrolyte K having a thickness of 100 µm. The thus obtained electrolyte film was cut to obtain a disk having a diameter of 1 cm. The disk was sandwiched between a pair of stainless steel electrodes, followed by measurement of the ionic conductivity at 25°C according to the above-mentioned ionic conductivity measurement method. The ionic conductivity was found to be 0.5 mS/cm. Thus the ionic conductivity higher than that in Comparative Example 1 as described below could be achieved.

### Example 12

2.14 Grams (5 mmol) of bis(pentafluoroisopropenyl) terephthalate (FDFT), 3.6 g (20 mmol) of diethyl carbonate, 1.76 g (20 mmol) of ethylene carbonate, 0.242 g (1 mmol) of benzoyl peroxide and LiPF₆ as an electrolytic salt were mixed to obtain a solution L having an electrolytic salt concentration of 1 mol/dm³. Successively, the solution L was coated on a glass using a bar coater, and kept at 80°C for 3 days to obtain a solid electrolyte L having a thickness of 100 µm. The thus obtained electrolyte film was cut to obtain a disk having a diameter of 1 cm. The disk was sandwiched between a pair of stainless steel electrodes, followed by measurement of the ionic conductivity at 25°C according to the above-mentioned ionic conductivity measurement method. The ionic conductivity was found to be 0.5 mS/cm. Thus the ionic conductivity higher than that in Comparative Example 1 as described below could be achieved.

### Example 13

The same procedure as in Example 11 was repeated except that LiPF₆ was replaced with LiCF₃SO₃ to obtain a solution M. Successively, the solution M was coated on a glass using a bar coater, and kept at 80°C for 3 days to obtain a solid electrolyte M having a thickness of 100 µm. The thus obtained electrolyte film was cut to obtain a disk having a diameter of 1 cm. The disk was sandwiched between a pair of stainless steel electrodes, followed by measurement of the ionic conductivity at 25°C according to the above-mentioned ionic conductivity measurement method. The ionic conductivity was found to be 0.6 mS/cm. Thus the ionic conductivity higher than that in Comparative Example 1 as described below could be achieved.

### Example 14

The same procedure as in Example 12 was repeated except that LiCF₃SO₃ was replaced with LiN(CF₃SO₃)₂ to obtain a solution N. Successively, the solution N was coated on a glass using a bar coater, and kept at 80°C for 3 days to obtain a solid electrolyte N having a thickness of 100 µm. The thus obtained electrolyte film was cut to obtain a disk having a diameter of 1 cm. The disk was sandwiched between a pair of stainless steel electrodes, followed by measurement of the ionic conductivity at 25°C according to the above-mentioned ionic conductivity measurement method. The ionic conductivity was found to be 0.7 mS/cm. Thus the ionic conductivity higher than that in Comparative Example 1 as described below could be achieved.

Table 1 summarizes the ionic conductivity obtained in each of Examples 1 to 14 described above.

**Table 1**

| Example | Ionic conductivity mScm⁻¹ | Initial discharging capacity mAh | Cycle characteristic | High-speed charge-discharge characteristics % |
|---|---|---|---|---|
| 1 | 0.08 | - | - | - |
| 2 | 0.08 | - | - | - |
| 3 | 0.09 | - | - | - |
| 4 | 0.09 | - | - | - |
| 5 | 0.1 | - | - | - |
| 6 | 0.3 | - | - | - |
| 7 | 0.3 | - | - | - |
| 8 | 0.4 | - | - | - |
| 9 | 0.5 | - | - | - |
| 10 | 0.5 | - | - | - |
| 11 | 0.5 | - | - | - |
| 12 | 0.6 | - | - | - |
| 13 | 0.7 | - | - | - |
| 14 | 0.8 | - | - | - |
| 15 | - | 0.6 | 30 | 40 |
| 16 | - | 0.6 | 30 | 40 |
| 17 | - | 0.7 | 35 | 45 |
| 18 | - | 0.7 | 40 | 50 |
| 19 | - | 0.7 | 40 | 50 |
| 20 | - | 0.7 | 40 | 50 |
| 21 | - | 0.8 | 45 | 55 |
| 22 | - | 0.8 | 45 | 55 |
| 23 | - | 0.8 | 45 | 55 |
| 24 | - | 0.9 | 50 | 60 |
| 25 | - | 0.9 | 50 | 60 |
| 26 | - | 1.0 | 60 | 65 |
| 27 | - | 1.1 | 70 | 70 |
| 28 | - | 1.2 | 80 | 80 |
| (Comparative Example 1) | 0.0006 | - | - | - |
| (Comparative Example 2 | - | 0.003 | 10 | 10 |

### Example 15

As shown in Fig. 1 and Fig. 2, a non-woven fabric was placed between a positive electrode 1 and a negative electrode 3, which electrodes had been obtained according to the above-mentioned method, and a load of 0.1 MPa was applied thereto to obtain a laminate. Successively, stainless steel terminals 5 and 6 were mounted to the positive electrode and the negative electrode, respectively, and the entire assembly was inserted into a folder-like aluminum-laminated film 7. Further, the solution A obtained in Example 1 was injected into the non-woven fabric, and the ends of the folder-like aluminum-laminated film were heat-welded to complete a hermetic seal. Successively, the resultant assembly was kept in a constant temperature bath of 80°C for 15 hours, thereby obtaining a battery A. The initial discharging capacity of the obtained battery A was found to be 0.6 mAh, and the cycle characteristic thereof was found to be 30 times. Further, the high-speed charge-discharge characteristic thereof was found to be 40%. Thus, a battery superior in its initial discharging capacity, cycle characteristic and high-speed charge-discharge characteristic as compared with the battery of Comparative Example 2 described below could be achieved. Performances of the obtained battery A are as shown in Table 1. Furthermore, when the aluminum-laminated film of the obtained battery was peeled, no fluidity of the electrolyte was observed inside of the battery.

### Example 16

The same procedure as in Example 15 was repeated except that the solution A was replaced with the solution B obtained in Example 2, thereby obtaining a battery B. The initial discharging capacity, cycle characteristic and high-speed charge-discharge characteristic of the obtained battery B were found to be 0.6 mAh, 30 times, and 30%, respectively. Thus, a battery superior in its initial discharging capacity, cycle characteristic and high-speed charge-discharge characteristic as compared with the battery of Comparative Example 2 described below could be achieved. Performances of the obtained battery B are as shown in Table 1. Furthermore, when the aluminum-laminated film of the obtained battery was peeled, no fluidity of the electrolyte was observed inside of the battery.

### Example 17

The same procedure as in Example 15 was repeated except that the solution A was replaced with the solution C obtained in Example 3, thereby obtaining a battery C. The initial discharging capacity, cycle characteristic and high-speed charge-discharge characteristic of the obtained battery C were found to be 0.7 mAh, 35 times, and 45%, respectively. Thus, a battery superior in its initial discharging capacity, cycle characteristic and high-speed charge-discharge characteristic as compared with the battery of Comparative Example 2 described below could be achieved. Performances of the obtained battery C are as shown in Table 1. Furthermore, when the aluminum-laminated film of the obtained battery was peeled, no fluidity of the electrolyte was observed inside of the battery.

### Example 18

The same procedure as in Example 15 was repeated except that the solution A was replaced with the solution D obtained in Example 4, thereby obtaining a battery D. The initial discharging capacity, cycle characteristic and high-speed charge-discharge characteristic of the obtained battery D were found to be 0.7 mAh, 40 times, and 50%, respectively. Thus, a battery superior in its initial discharging capacity, cycle characteristic and high-speed charge-discharge characteristic as compared with the battery of Comparative Example 2 described below could be achieved. Performances of the obtained battery D are as shown in Table 1. Furthermore, when the aluminum-laminated film of the obtained battery was peeled, no fluidity of the electrolyte was observed inside of the battery.

### Example 19

The same procedure as in Example 15 was repeated except that the solution A was replaced with the solution E obtained in Example 5, thereby obtaining a battery E. The initial discharging capacity, cycle characteristic and high-speed charge-discharge characteristic of the obtained battery E were found to be 0.7 mAh, 40 times, and 50%, respectively. Thus, a battery superior in its initial discharging capacity, cycle characteristic and high-speed charge-discharge characteristic as compared with the battery of Comparative Example 2 described below could be achieved. Performances of the obtained battery E are as shown in Table 1. Furthermore, when the aluminum-laminated film of the obtained battery was peeled, no fluidity of the electrolyte was observed inside of the battery.

### Example 20

The same procedure as in Example 15 was repeated except that the solution A was replaced with the solution F obtained in Example 6, thereby obtaining a battery F. The initial discharging capacity, cycle characteristic and high-speed charge-discharge characteristic of the obtained battery F were found to be 0.7 mAh, 40 times, and 50%, respectively. Thus, a battery superior in its initial discharging capacity, cycle characteristic and high-speed charge-discharge characteristic as compared with the battery of Comparative Example 2 described below could be achieved. Performances of the obtained battery F are as shown in Table 1. Furthermore, when the aluminum-laminated film of the obtained battery was peeled, no fluidity of the electrolyte was observed inside of the battery.

### Example 21

The same procedure as in Example 15 was repeated except that the solution A was replaced with the solution G obtained in Example 7, thereby obtaining a battery G. The initial discharging capacity, cycle characteristic and high-speed charge-discharge characteristic of the obtained battery G were found to be 0.8 mAh, 45 times, and 55%, respectively. Thus, a battery superior in its initial discharging capacity, cycle characteristic and high-speed charge-discharge characteristic as compared with the battery of Comparative Example 2 described below could be achieved. Performances of the obtained battery G are as shown in Table 1. Furthermore, when the aluminum-laminated film of the obtained battery was peeled, no fluidity of the electrolyte was observed inside of the battery.

### Example 22

The same procedure as in Example 15 was repeated except that the solution A was replaced with the solution H obtained in Example 8, thereby obtaining a battery H. The initial discharging capacity, cycle characteristic and high-speed charge-discharge characteristic of the obtained battery H were found to be 0.8 mAh, 45 times, and 55%, respectively. Thus, a battery superior in its initial discharging capacity, cycle characteristic and high-speed charge-discharge characteristic as compared with the battery of Comparative Example 2 described below could be achieved. Performances of the obtained battery H are as shown in Table 1. Furthermore, when the aluminum-laminated film of the obtained battery was peeled, no fluidity of the electrolyte was observed inside of the battery.

### Example 23

The same procedure as in Example 15 was repeated except that the solution A was replaced with the solution I obtained in Example 9, thereby obtaining a battery I. The initial discharging capacity, cycle characteristic and high-speed charge-discharge characteristic of the obtained battery I were found to be 0.8 mAh, 45 times, and 55%, respectively. Thus, a battery superior in its initial discharging capacity, cycle characteristic and high-speed charge-discharge characteristic as compared with the battery of Comparative Example 2 described below could be achieved. Performances of the obtained battery I are as shown in Table 1. Furthermore, when the aluminum-laminated film of the obtained battery was peeled, no fluidity of the electrolyte was observed inside of the battery.

### Example 24

The same procedure as in Example 15 was repeated except that the solution A was replaced with the solution J obtained in Example 10, thereby obtaining a battery J. The initial discharging capacity, cycle characteristic and high-speed charge-discharge characteristic of the obtained battery J were found to be 0.9 mAh, 50 times, and 60%, respectively. Thus, a battery superior in its initial discharging capacity, cycle characteristic and high-speed charge-discharge characteristic as compared with the battery of Comparative Example 2 described below could be achieved. Performances of the obtained battery J are as shown in Table 1. Furthermore, when the aluminum-laminated film of the obtained battery was peeled, no fluidity of the electrolyte was observed inside of the battery.

### Example 25

The same procedure as in Example 15 was repeated except that the solution A was replaced with the solution K obtained in Example 11, thereby obtaining a battery K. The initial discharging capacity, cycle characteristic and high-speed charge-discharge characteristic of the obtained battery K were found to be 0.9 mAh, 50 times, and 60%, respectively. Thus, a battery superior in its initial discharging capacity, cycle characteristic and high-speed charge-discharge characteristic as compared with the battery of Comparative Example 2 described below could be achieved. Performances of the obtained battery K are as shown in Table 1. Furthermore, when the aluminum-laminated film of the obtained battery was peeled, no fluidity of the electrolyte was observed inside of the battery.

### Example 26

The same procedure as in Example 15 was repeated except that the solution A was replaced with the solution L obtained in Example 12, thereby obtaining a battery L. The initial discharging capacity, cycle characteristic and high-speed charge-discharge characteristic of the obtained battery L were found to be 1.0 mAh, 60 times, and 65%, respectively. Thus, a battery superior in its initial discharging capacity, cycle characteristic and high-speed charge-discharge characteristic as compared with the battery of Comparative Example 2 described below could be achieved. Performances of the obtained battery L are as shown in Table 1. Furthermore, when the aluminum-laminated film of the obtained battery was peeled, no fluidity of the electrolyte was observed inside of the battery.

### Example 27

The same procedure as in Example 15 was repeated except that the solution A was replaced with the solution M obtained in Example 13, thereby obtaining a battery M. The initial discharging capacity, cycle characteristic and high-speed charge-discharge characteristic of the obtained battery M were found to be 1.1 mAh, 70 times, and 70%, respectively. Thus, a battery superior in its initial discharging capacity, cycle characteristic and high-speed charge-discharge characteristic as compared with the battery of Comparative Example 2 described below could be achieved. Performances of the obtained battery M are as shown in Table 1. Furthermore, when the aluminum-laminated film of the obtained battery was peeled, no fluidity of the electrolyte was observed inside of the battery.

### Example 28

The same procedure as in Example 15 was repeated except that the solution A was replaced with the solution N obtained in Example 14, thereby obtaining a battery N. The initial discharging capacity, cycle characteristic and high-speed charge-discharge characteristic of the obtained battery N were found to be 1.2 mAh, 80 times, and 80%, respectively. Thus, a battery superior in its initial discharging capacity, cycle characteristic and high-speed charge-discharge characteristic as compared with the battery of Comparative Example 2 described below could be achieved. Performances of the obtained battery N are as shown in Table 1. Furthermore, when the aluminum-laminated film of the obtained battery was peeled, no fluidity of the electrolyte was observed inside of the battery.

Comparative Examples are given as follows.

### Comparative Example 1

A mixture of 3.7 g of a copolymer of ethylene oxide (80 mol%) and 2-(2-methoxyethoxy)ethyl glycidyl ether (20 mol%) and 0.66 g of LiPF₆ as an electrolytic salt was added to acetonitrile to obtain a solution O. Successively, the resulting solution was coated on a glass using a bar coater, and kept at 80°C for 3 days to obtain a solid electrolyte O having a thickness of 100 µm. The thus obtained electrolyte film was cut to obtain a disk having a diameter of 1 cm. The disk was sandwiched between a pair of stainless steel electrodes, followed by measurement of the ionic conductivity at 25°C according to the above-mentioned ionic conductivity measurement method. The ionic conductivity was found to be 0.00006 mS/cm.

### Comparative Example 2

### <Positive electrode>

A mixture of 34 g of Cell Seed, lithium cobaltate manufactured by Nippon Chemical Industrial Co., Ltd.; 4.3 g of SP 270, graphite manufactured by Nippon Graphite Industrial, Ltd.; 3.7 g of a copolymer of ethylene oxide (80 mol%) and 2-(2-methoxyethoxy)-ethyl glycidyl ether (20 mol%) and 0.66 g of LiPF₆ as an electrolytic salt was added to acetonitrile to mix with one another, thereby obtaining a slurry. The slurry was coated on an aluminum foil having a thickness of 20 µm using a doctor blade and then dried. The slurry was coated in an amount of 150 g/m². The dried foil was pressed so that the bulk density of the coating be 3.0 g/cm³ and cut into a 1 cm × 1 cm size to obtain a positive electrode A.

### <Negative electrode>

A mixture of 39.2 g of Carbotron PE, amorphous carbon manufactured by Kureha Chemical Industry Co., Ltd.; 3.7 g of a copolymer of ethylene oxide (80 mol%) and 2-(2-methoxyethoxy)ethyl glycidyl ether (20 mol%) and 0.66 g of LiPF₆ as an electrolytic salt was added to acetonitrile to mix with one another, thereby obtaining a slurry. The slurry was coated on a copper foil having a thickness of 20 µm using a doctor blade and then dried. The slurry was coated in an amount of 70 g/m². The dried foil was pressed so that the bulk density of the coating be 1.0 g/cm³ and cut into a 1.2 cm × 1.2 cm size to obtain a negative electrode A.

Thereafter, a non-woven fabric was placed between the positive electrode A and the negative electrode B obtained above, and a load of 0.1 MPa was applied thereto to obtain a laminate. Successively, stainless steel terminals were mounted to the positive electrode and the negative electrode, respectively, and the entire assembly was inserted into a folder-like aluminum-laminated film. Further, the solution O was injected into the non-woven fabric, and the ends of the folder-like aluminum-laminated film was heat-welded to complete a hermetic seal. Successively, the resultant assembly was kept in a constant temperature bath of 80°C for 15 hours, thereby obtaining a battery O. The initial discharging capacity of the obtained battery O was found to be 0.003 mAh, and the cycle characteristic thereof was found to be 10 times. Further, the high-speed charge-discharge characteristic thereof was found to be 10%. Furthermore, when the aluminum-laminated film of the obtained battery was peeled, no fluidity of the electrolyte was observed inside of the battery.

With respect to all Examples and Comparative Examples mentioned above, components contained in the electrolyte and amounts thereof are summarized in Table 2.

**Table 2**

| Example | FDFTmmol | FDFA /mmol | FDFC /mmol | BPO*¹/mmol | PEG*²/mmol | DiOX*³/mmol | DMC*⁴/mmol | DEC*⁵/mmol | EC*⁶/mmol | LiPF₆ /mol dm⁻³ | LiCF₃SO₃ /mol dm⁻³ | LiN(CF₃SO₃)₂ /mol dm⁻³ |
|---|---|---|---|---|---|---|---|---|---|---|---|---|
| 1 | 5 | - | - | 1 | 40 | - | - | - | - | 1 | - | - |
| 2 | - | 5 | - | 1 | 40 | - | - | - | - | 1 | - | - |
| 3 | - | - | 5 | 1 | 40 | - | - | - | - | 1 | - | - |
| 4 | 5 | - | - | 1 | - | 40 | - | - | - | 1 | - | - |
| 5 | - | 5 | - | 1 | - | 40 | - | - | - | 1 | - | - |
| 6 | - | - | 5 | 1 | - | 40 | - | - | - | 1 | - | - |
| 7 | 5 | - | - | 1 | - | - | 40 | - | - | 1 | - | - |
| 8 | - | 5 | - | 1 | - | - | 40 | - | - | 1 | - | - |
| 9 | - | - | 5 | 1 | - | - | 40 | - | - | 1 | - | - |
| 10 | 5 | - | - | 1 | - | - | - | 40 | - | 1 | - | - |
| 11 | 5 | - | - | 1 | - | - | - | - | 40 | 1 | - | - |
| 12 | 5 | - | - | 1 | - | - | - | 20 | 20 | 1 | - | - |
| 13 | 5 | - | - | 1 | - | - | - | 20 | 20 | - | 1 | - |
| 14 | 5 | - | - | 1 | - | - | - | 20 | 20 | - | - | 1 |
| 15 | 5 | - | - | 1 | 40 | - | - | - | - | 1 | - | - |
| 16 | - | 5 | - | 1 | 40 | - | - | - | - | 1 | - | - |
| 17 | - | - | 5 | 1 | 40 | - | - | - | - | 1 | - | - |
| 18 | 5 | - | - | 1 | - | 40 | - | - | - | 1 | - | - |
| 19 | - | 5 | - | 1 | - | 40 | - | - | - | 1 | - | - |
| 20 | - | - | 5 | 1 | - | 40 | - | - | - | 1 | - | - |
| 21 | 5 | - | - | 1 | - | - | 40 | - | - | 1 | - | - |
| 22 | - | 5 | - | 1 | - | - | 40 | - | - | 1 | - | - |
| 23 | - | - | 5 | 1 | - | - | 40 | - | - | 1 | - | - |
| 24 | 5 | - | - | 1 | - | - | - | 40 | - | 1 | - | - |
| 25 | 5 | - | - | 1 | - | - | - | - | 40 | 1 | - | - |
| 26 | 5 | - | - | 1 | - | - | - | 20 | 20 | 1 | - | - |
| 27 | 5 | - | - | 1 | - | - | - | 20 | 20 | - | 1 | - |
| 28 | 5 | - | - | 1 | - | - | - | 20 | 20 | - | - | 1 |

| | | | | | | | | | | | | |
|---|---|---|---|---|---|---|---|---|---|---|---|---|
| Notes: *1: Benzoyl peroxide, | | | | | | | | | | | | |
| *2: Polyethylene glycol, | | | | | | | | | | | | |
| *3: 1,4-Dioxane, | | | | | | | | | | | | |
| *4: Dimethyl carbonate, | | | | | | | | | | | | |
| *5: Diethyl carbonate, | | | | | | | | | | | | |
| *6: Ethylene carbonate | | | | | | | | | | | | |

According to the present invention, an electrolyte exhibiting a high ionic conductivity, and a lithium ion secondary battery exhibiting superior charge and discharge characteristics can be obtained.

## Claims

1. An electrolyte, which comprises a first compound having at least one methylene group adjacent to an oxygen atom in the molecule, a perfluoroisopropenyl ester-carrying second compound represented by the following formula (1), 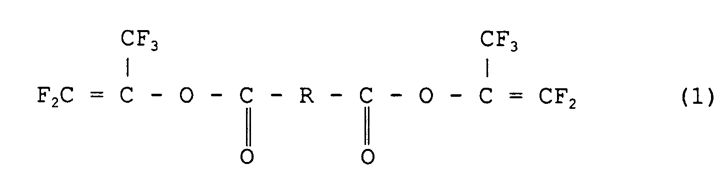 wherein R is 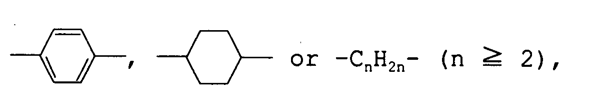 and an electrolytic salt, the first compound and the second compound having been polymerized with each other.

2. The electrolyte according to Claim 1, wherein the first compound comprises at least one compound selected from the group consisting of diethyl carbonate, 1,4-dioxane, polyethylene glycol, ethylene carbonate and dimethyl carbonate.

3. A lithium ion secondary battery comprising a positive electrode capable of occluding and discharging lithium ion, a negative electrode capable of occluding and discharging lithium ion and an electrolyte, wherein the electrolyte comprises a first compound having at least one methylene group adjacent to an oxygen atom in the molecule, a perfluoroisopropenyl ester-carrying second compound represented by the following formula (1), 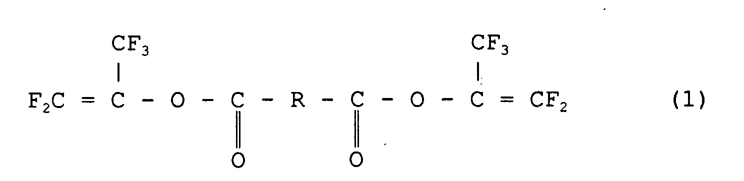 wherein R is 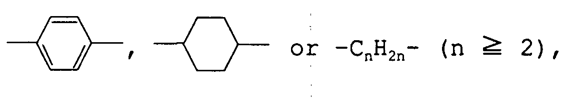 and an electrolytic salt, the first compound and the second compound having been polymerized with each other.

4. The lithium ion secondary battery according to Claim 3, wherein the first compound comprises at least one compound selected from the group consisting of diethyl carbonate, 1,4-dioxane, polyethylene glycol, ethylene carbonate and dimethyl carbonate.
